# EUROPEAN PATENT SPECIFICATION

(11) **EP 0 831 447 B1**
(45) Date of publication and mention of the grant of the patent: **18.07.2001**
(21) Application number: 97307289.5
(22) Date of filing: 19.09.1997
(51) Int. Cl.: G09F 9/35

(54) **A multi liquid crystal display device**
Mehrfachige Flüssigkristallanzeigevorrichtung
Dispositif d'affichage multiple à cristaux liquides

(30) Priority: 20.09.1996 KR 9641375
(43) Date of publication of application: 25.03.1998
(73) Proprietor: SAMSUNG DISPLAY DEVICES CO., LTD., Suwon-city, Kyungki-do 442-390 (KR)
(72) Inventor: Kim, Si-han, Kangdong-gu, Seoul (KR); Song, Byong-sang, Kwonsun-gu, Suwon-City, Kyungki-do (KR)
(74) Representative: Kyle, Diana

(56) References cited:
- EP-A- 0 493 103
- FR-A- 2 713 812
- US-A- 4 832 457

## Description

The present invention relates to a liquid crystal display (LCD) device formed by attaching a plurality of liquid crystal display panels, and more particularly, to a multi LCD device in which a discontinuous portion of an image at a junction between LCD panels can be removed.

Recently, the LCD has been widely used as a low-power-consuming display device, and a screen thereof has been expanding in size to display a greater amount of information. The typical size of an LCD is at about 10 inches diagonally and the manufacture of an LCD larger than this is difficult due to limitations of yield and equipments, further increasing manufacturing costs.

One manufacturing method of such a large LCD is to combine several small LCD panels into a single body. However, the junctions between adjacent LCD panels cannot be avoided, and the junctions form a non-image area displaying a vertical or horizontal line on the entire large screen. Thus, to minimize such a junction is an important factor in manufacturing of a multi LCD.

When LCD panels are combined, the junction between the panels is required to be minimized so that the thickness of the coating of a sealant is equal to or less than 30*µ*m. However, in this case, the attachment is weak so that reliability of the LCD is not secured.

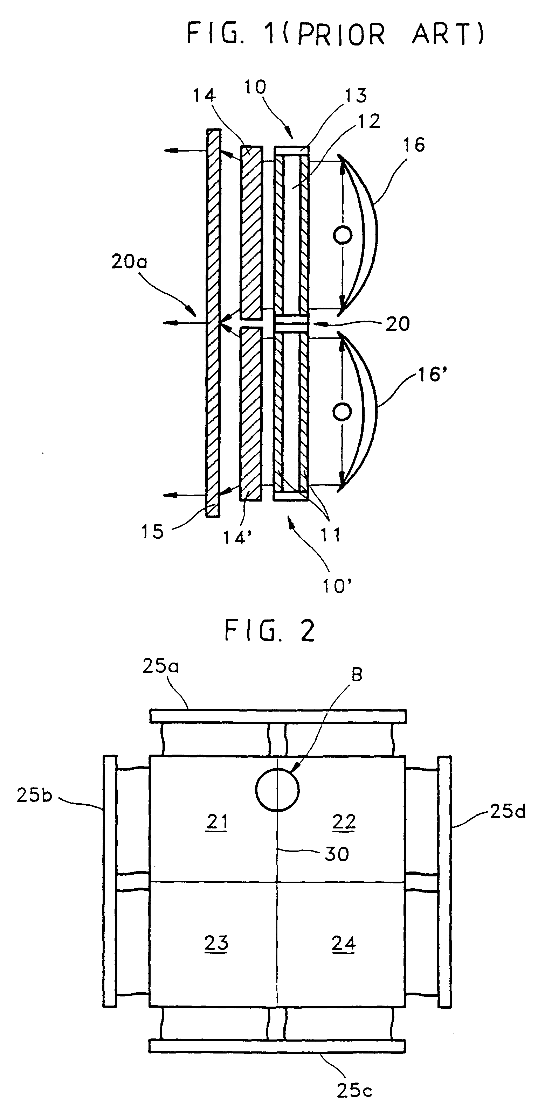

Another suggestion by Fujitsu of Japan has been made to solve the above problem by applying an optical configuration, and a multi LCD adopting the same is shown in FIG. 1.

Referring to FIG. 1, two LCD panels 10 and 10' are combined, and each LCD panel has a structure in which liquid crystal 12 is sealed by a sealing member 13 between a pair of transparent substrates 11 facing each other. Optical lenses 14 and 14' are provided to the front of the LCD panels 10 and 10', respectively, and a screen 15 for finally forming an image is provided in front of the optical lenses 14 and 14'. Also, back lights 16 and 16' for emitting light are installed at the rear of the LCD panels 10 and 10'.

In the multi LCD having such a structure, an image is formed by a combination of each of the LCD panels 10 and 10'. At this time, the image is displayed as being divided by a junction 20 between the LCD panels 10 and 10'.

According to this conventional technology, the discontinued portion of the image caused by the junction 20 between the LCD panels 10 and 10' is compensated for by the optical lenses 14 and 14'. That is, the images formed by the respective LCD panels 10 and 10' are magnified by the optical lenses 14 and 14' in a predetermined ratio and then projected to the screen 15. Here, the images which are formed in the LCD panels 10 and 10' and projected to the screen 15 after being magnified by the optical lenses 14 and 14' are fittingly aligned at an image boundary 20a on the screen 15. Thus, the discontinuity of the image caused by the junction 20 can be removed.

However, the above multi-LCD must be provided with back lights 16 and 16' for emitting a light of great intensity and an additional screen 15, making the structure complicated and increasing manufacturing costs.

According to the present invention, a multi liquid crystal display device comprises: a plurality of liquid crystal display panels in which the side surfaces thereof are combined with each other, each of the liquid crystal display panels including a pair of substrates facing each other and having liquid crystal injected therebetween; and an attachment film attached to the side surface of the liquid crystal display panel which is combined to the adjacent liquid crystal display panel, in which each of the liquid crystal display panels are combined by attaching the attachment films to each other.

It is preferable in the present invention that the attachment film is attached to the one side of a pixel which is sectioned by a black matrix on the liquid crystal display panel; that the color of the attachment film is the same as that of the black matrix; and that the total thickness of the attachment film interposed between the mutually combined liquid crystal display panels is the same as the width of the black matrix.

An example of the present invention will now be described in detail with reference to the accompanying drawings, in which:
FIG. 1 is a sectional view illustrating a conventional multi LCD;
FIG. 2 is a plan view illustrating an example of a multi LCD device in accordance with the present invention;
FIG. 3 is a perspective view illustrating the structure of an LCD panel of the LCD shown in FIG. 2;
FIG. 4 is a view showing a state in which a contact film is attached to the side surface of the LCD panel shown in FIG. 3; and,
FIG. 5 is a magnified view of portion "B" of FIG. 2.

As shown in FIG. 2, a multi LCD device according to a preferred embodiment of the present invention is formed by combining four LCD panels 21, 22, 23, 24. Here, the number of LCD panels should not be limited to the present embodiment.

The LCD panels 21, 22, 23 and 24 are electrically connected to driving circuits 25a and 25b, 25a and 25d, 25b and 25c, and 25c and 25d, respectively, and each driving circuit applies an appropriate voltage according to an image signal.

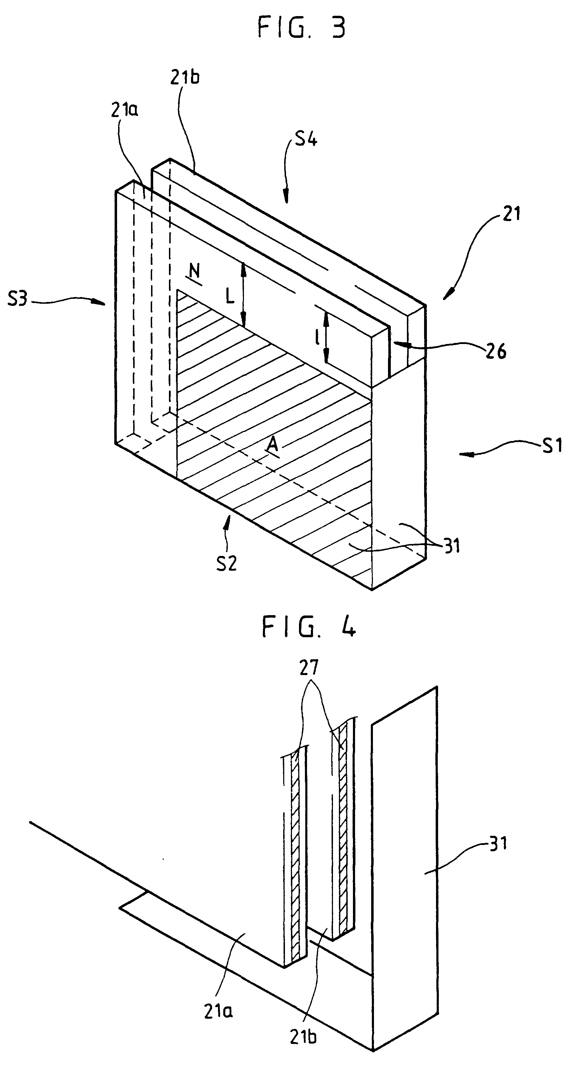

The structure of the LCD panel 21 is shown in detail in FIG. 3. Referring to the drawing, the LCD panel 21 including a pair of substrates 21a and 21b facing each other and having liquid crystal injected therebetween is sectioned into an active area "A" in which pixels form an image and a non-active area "N" in which an image is not formed.

An attachment film 31, instead of the sealing member (13 of FIG. 1), is attached to the side surfaces S1 and S2 of the LCD panel 21 contacting the other LCD panels 22 and 23 (see FIG. 2). Also, the other side surfaces S3 and S4 of the LCD panel 21, which do not contact the other LCD panels, are sealed using a sealing member and a sealant as described earlier. The attachment film 31 is preferably a common resin film, and a thin glass or an insulated metal piece can be used therefor.

Also, it is preferable that the side surface S1 of the LCD panel 21 is not completely sealed by the attachment film 31 to form an inlet 26 for the injection of liquid crystal. Here, the attachment film 31 is attached longer than at least active area "A" which forms an image on the LCD panel. That is, it is preferable that the length "1" of the side surface S1 of the LCD panel 21 which is not to be sealed by the attachment film 31 is less than the width "L" of the non-active area "N". This is to prevent an ill effect of an ultraviolet-curing resin, which is usually used to seal the inlet 26 after liquid crystal is injected therethrough, by penetrating active area "A" of the LCD panel 21.

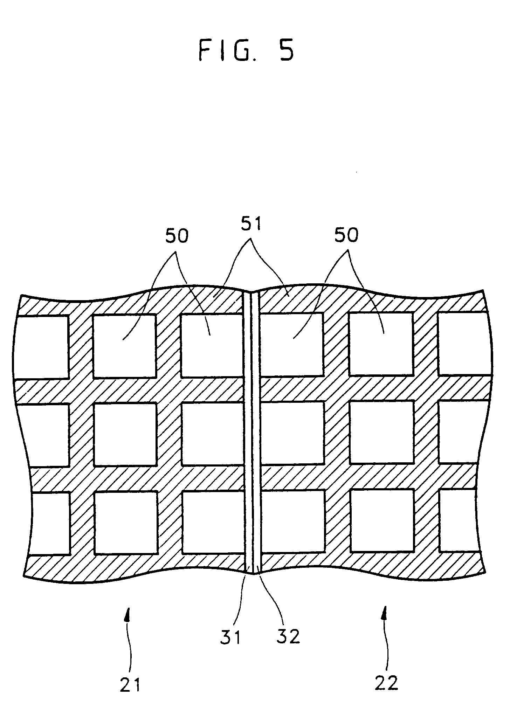

FIG. 4 shows a state in which the attachment film 31 is attached to the side surfaces S1 and S2 of the LCD panel 21. As shown in the drawing, an adhesive 27 is coated on the side surfaces of the respective substrates 21a and 21b. Here, it is preferable that the adhesive 27 is coated by a roller (not shown), or by an injector (not shown) in strips, to have a width less than the thickness of each of the substrates 21a and 21b. Accordingly, when the attachment film 31 is pressed to be attached, the coated adhesive 27 is spread and the adhesion is completed. Here, a usual sealant is used as the adhesive to attach the attachment film 31 to the substrates 21a and 21b, and the thickness of the attachment layer is preferably below 10*µ*m. Also, it is preferable that the thickness of the attachment films 31 and 32 (see FIG. 5) are between 15-25*µ* m.

Although the attachment film 31 can be separately attached to each of the side surfaces S1 and S2, it is preferable that a single strip of the attachment film 31 is used for the attachment, as shown in FIG. 4.

FIG. 5 shows the junction 30 of FIG. 2 by magnifying the same. In the drawing, the attachment films 31 and 32 are respectively attached to the side surfaces of the LCD panels 21 and 22 in which pixels 50 are separated by a black matrix 51. The attachment films 31 and 32 are directly attached to one side surface of the pixels 50 to thereby minimize the thickness of the junction.

The LCD panels 21 and 22 are mutually combined as the attachment films 31 and 32 respectively attached to the LCD panels 21 and 22 are attached to each other. The color of the attachment films 31 and 32 is black like the black matrix 51. Also, it is preferable that the total thickness of the attachment films 31 and 32 attached together is equal to or similar to the thickness of the black matrix 51 on the LCD panels 21 and 22. Further, since the attachment films 31 and 32 are black, a viewer cannot easily notice the attachment films 31 and 32 and the junction 30. Thus, the discontinuity of the image caused by lines crossing over the screen as mentioned earlier can be removed.

In the preferred embodiment of the present invention, although a plurality of LCD panels are combined by mutually attaching the attachment films, a multi LCD panel can be formed by arranging the plurality of LCD panels such that the attachment films mutually contact the supporting the outer edges of the closely arranged LCD panels using a frame.

As described above, according to the present invention, since the LCD panels are combined by the attachment films having the same thickness and color as the black matrix, the discontinuity of an image due to the junction can be removed.

Also, since the LCD panels are simply attached by an adhesive, a large multi LCD device can be easily manufactured with lower costs.

## Claims

1. A liquid crystal display device comprising:
a plurality of liquid crystal display panels (21-24) in which the side surfaces (S1-S4) thereof are combined with each other, each of said liquid crystal display panels (21-24) including a pair of substrates (a,b) facing each other and having liquid crystal injected therebetween;
characterized in that
an attachment film (31, 32) is attached to said side surfaces (S1-S4) of each liquid crystal display panel,
wherein said adjacent liquid crystal display panels (21-24) are combined by attaching said attachment films to each other.

2. A liquid crystal display device as claimed in claim 1, wherein said attachment film (31,32) is attached to the one side of a pixel (50) which is sectioned by a black matrix (51) on said liquid crystal display panel.

3. A liquid crystal display device as claimed in claim 1 or 2, wherein the thickness of said attachment film (31,32) is between 15-25*µ*m.

4. A liquid crystal display device as claimed in claim 2 or 3, wherein the color of said attachment film (31,32) is the same as that of said black matrix (51).

5. A liquid crystal display device as claimed in any of claims 2 to 4, wherein the total thickness of said attachment film (31,32) interposed between said mutually combined liquid crystal display panels is the same as the width of said black matrix (51).

## Patentansprüche

1. Flüssigkristallanzeigevorrichtung, umfassend:
mehrere Flüssigkristallanzeigefelder (21-24), deren Seitenflächen (S1-S4) miteinander kombiniert sind, wobei jedes Flüssigkristallanzeigefeld (21-24) ein Paar von einander gegenüberliegenden Substraten (a, b) mit einem dazwischen eingefüllten Flüssigkristall aufweist,
dadurch **gekennzeichnet**,
dass an die Seitenflächen (S1-S4) jedes Flüssigkristallanzeigefeldes ein Befestigungsfilm (31, 32) angebracht ist,
wobei die benachbarten Flüssigkristallanzeigefelder (21-24) miteinander durch Anbringen der Befestigungsfilme aneinander kombiniert sind.

2. Flüssigkristallanzeigevorrichtung nach Anspruch 1, wobei der Befestigungsfilm (31, 32) an derjenigen Seite eines Bildpunkts (50) befestigt ist, welche durch eine schwarze Matrix (51) auf dem Flüssigkristallanzeigefeld unterteilt ist.

3. Flüssigkristallanzeigevorrichtung nach Anspruch 1 oder 2, wobei die Dicke des Befestigungsfilms (31, 32) 15-25 *µ*m beträgt.

4. Flüssigkristallanzeigevorrichtung nach Anspruch 2 oder 3, wobei die Farbe des Befestigungsfilms (31, 32) der Farbe der schwarzen Matrix (51) entspricht.

5. Flüssigkristallanzeigevorrichtung nach einem der Ansprüche 2 bis 4, wobei die gesamte Dicke des zwischen den miteinander kombinierten Flüssigkristallanzeigefeldern angeordneten Befestigungsfilms (31, 32) der Breite der schwarzen Matrix (51) entspricht.

## Revendications

1. Dispositif d'affichage à cristaux liquides comprenant :
une pluralité de panneaux d'affichage à cristaux liquides (21-24) dans lequel les surfaces latérales (51-54) de ceux-ci sont combinées les unes avec les autres, chacun desdits panneaux d'affichage à cristaux liquides (21-24) comportant une paire de substrats (a, b) tournés l'un vers l'autre et comportant un cristal liquide injecté entre eux ;
caractérisé en ce que
un film de fixation (31, 32) est fixé auxdites surfaces (S1-S4) de chaque panneau d'affichage à cristaux liquides,
dans lequel lesdits panneaux d'affichage à cristaux liquides adjacents (21-24) sont combinés par fixation desdits films de fixation les uns aux autres.

2. Dispositif d'affichage à cristaux liquides selon la revendication 1, dans lequel ledit film de fixation (31, 32) est fixé au premier côté d'un pixel (50) qui est partagé par une matrice noire (51) sur ledit panneau d'affichage à cristaux liquides.

3. Dispositif d'affichage à cristaux liquides selon la revendication 1 ou 2, dans lequel l'épaisseur dudit film de fixation (31, 32) est comprise entre 15 et 25 µm.

4. Dispositif d'affichage à cristaux liquides selon la revendication 2 ou 3, dans lequel la couleur dudit film de fixation (31, 32) est la même que celle de ladite matrice noire (51).

5. Dispositif d'affichage à cristaux liquides selon l'une quelconque des revendications 2 à 4, dans lequel l'épaisseur totale dudit film de fixation (31, 32) intercalés entre lesdits panneaux d'affichage à cristaux liquides mutuellement combinés est la même que la largeur de ladite matrice noire (51).
